# EUROPEAN PATENT SPECIFICATION

(11) **EP 2 961 792 B1**
(45) Date of publication and mention of the grant of the patent: **27.03.2019**
(21) Application number: 14707305.0
(22) Date of filing: 19.02.2014
(51) Int. Cl.: C08J 7/04, B44C 1/10, C08L 27/06, C08L 67/02

(54) **ANTIGRAFFITI LAYER FOR POLYVINYL CHLORIDE BASED GRAPHICS FILM**
GRAFFITISCHUTZSCHICHT FÜR POLYVINYLCHLORID-BASIERTE GRAPHISCHE FOLIE
COUCHE ANTI-GRAFITI POUR FILM GRAPHIQUE À BASE DE CHLORURE DE POLYVINYLE

(30) Priority: 28.02.2013 EP 13157241
(43) Date of publication of application: 06.01.2016
(73) Proprietor: 3M Innovative Properties Company, St. Paul, MN 55133-3427 (US)
(72) Inventor: DANNEWITZ, Viktor, D-41453 Neuss (DE)
(74) Representative: Vossius & Partner Patentanwälte Rechtsanwälte mbB
(86) International application number: PCT/US2014/017014
(87) International publication number: WO 2014/133834

(56) References cited:
- GB-A- 1 488 487
- JP-A- H0 716 997
- US-A- 4 839 218
- US-A1- 2004 202 828
- US-A1- 2007 231 525

## Description

The present invention relates to a method of making a colored graphics film.

PVC based adhesive films have been widely used in producing graphics or decorations on substrates. For example adhesive films are used to provide advertisement, logos or company names and information on vehicles such as vans, busses, trains, trams etc. They may also be used on buildings. Typically, the adhesive film will have to remain in place for an extended period of time up to several years. Accordingly, the graphics produced with the film are exposed to a large variety of weather conditions. Particularly in so called horizontal applications, where the film is applied over a generally horizontal surface such as on the hood of a car, the weathering conditions may be particularly severe. Accordingly, the adhesive film needs to have excellent weathering stability and excellent adhesion characteristics to the surface. Furthermore, the graphics are frequently applied on trains, busses and trams where they may be prone to vandalism and in particular graffiti is often applied thereon, thus destroying the appeal of the graphic or obscuring the advertisement. Removal of the graffiti from the graphic is often difficult and hence a variety of solutions have been developed in the art that render it easier to remove the graffiti and or prevent the graffiti paint from sticking to the graphic film.

Commercially available anti-graffiti films include for example polyester based over laminate films such as SG 8993 and SC 639 available from 3M Company. These films are adhesive based films that can be adhered and laminated over the graphic. However, while they provide excellent protection against graffiti vandalism, the use of these films requires an extra step in the making of a graphic and therefore adds labor and cost. Furthermore, the weathering properties of the graphic may be affected and moreover, the laminate adds to the thickness of the overall graphic thus reducing the flexibility thereof. This can in particular be disadvantageous in applications where the surface to which the graphic is applied is curved and/or uneven. The use of over laminates in such applications may therefore be unpractical and can lead to unsatisfactory results. Moreover, the edges of the graphic with the over laminate may need to be protected or sealed to avoid moisture and the like penetrate into the edges and causing delamination of the over laminate.

It would thus be desirable to find alternative ways of protecting PVC based graphic films against graffiti vandalism. It would in particular be desirable to find solutions that avoid additional steps in the making of the graphic and that make the process of providing a graphic on a surface more easy and convenient whilst offering good anti-graffiti properties. It would further be desirable that the solution provides a graphic with good weathering stability. Desirably, the solution shall maximize the flexibility of the graphic and allow it to be applied on uneven and or curved surfaces. It would also be desired that the method does not detract from the optical appeal of the graphics film and does not negatively affect the appeal of the graphic.

GB 1 488 487 A discloses a transfer sheet comprising an indicium printed in a heat fused plastisol or organosol ink the plastisol or organosol comprising a dispersion of a polymer of vinyl chloride in a plasticizer, the plasticizer being present in an amount of up to 40% by wt. of the polymer.

JP H07-16997 A discloses a method for manufacturing a colored adhesive sheet comprising the steps of adding 20 pbw. of aluminum powder to 100 pbw. of vinyl chloride resin, 2 pbw. of Ba/Zn stabilizer, 0.5 pbw. of benzotriazole ultraviolet absorber, 10 pbw. of polyester plasticizer and 120 pbw. of hydrocarbon solvent, casting organosol obtained by agitating by a dissolver on a surface of a transparent yellow polyethylene terephthalate film having a thickness of 25 µm as a process sheet, preheating it at 80 °C for 3 min, then heating it at 150 °C for 3 min to form a colored resin layer having a thickness of 50 µm. The method further comprises the steps of coating, drying a surface of the colored resin layer with acrylic adhesive to form an adhesive layer having a thickness of 20 µm and laminating a peeling sheet on the surface of the adhesive layer, thereby obtaining the colored adhesive sheet.

US 4,839,218 discloses a composite polyester sheet which comprises a polyester film, a layer of a vinyl chloride plastisol composition (A) containing an adhesion-imparting agent, formed on the film and a layer of a vinyl chloride plastisol composition (B) containing no adhesion-imparting agent, formed on the layer of the composition (A).

US 2007/0231525 A1 discloses a process for the manufacture of polymer film graphics comprising providing a continuous substrate having a release layer thereon; applying an image layer in the shape of a graphic letter or design to the release layer; depositing an adhesive layer to the image layer and which has the same shape as the image layer graphic letter or design; curing the adhesive and image layers; and winding the polymer film graphics onto rolls.

The present invention relates to a method of making a colored graphics film, the method comprising:
(i) providing a transparent polyester film,
(ii) coating thereon a polyvinyl chloride organosol or plastisol composition comprising one or more color pigments,
(iii) heating so as to cause film forming of the polyvinyl chloride organosol or plastisol composition thereby obtaining a colored polyvinyl chloride film adhered on one side thereof to a transparent polyester film and
(iv) applying an adhesive layer to the side of the polyvinyl chloride film opposite to the side adhering to the transparent polyester film,
wherein the thickness of the polyester film is not more than 10 micrometer and wherein a temporary carrier web is provided on the side of the transparent polyester film that is opposite to the side that is being coated with the polyvinyl chloride organosol or plastisol composition and wherein the carrier web is provided on the polyester film prior to coating the polyester film with the polyvinyl chloride organosol or plastisol composition.
Disclosed herein is a colored graphics film comprising a polyvinyl chloride film layer having opposite major sides, one major side comprising an adhesive layer and the major side opposite thereto having a transparent polyester layer directly bonded to the polyvinyl chloride film layer.

Further disclosed herein is a method of making a graphic, the method comprising:
(i) providing a colored graphics film as defined above;
(ii) cutting the polyvinyl chloride film and the adhesive layer of the graphics film to define therein the plurality of discrete units,
(iii) delaminating or weeding the cut polyvinyl chloride film and the adhesive layer from the release liner of the graphics film so as to leave the plurality of discrete units on the release liner;
(iv) applying an adhesive application tape over the plurality of discrete units;
(v) removing the release liner thereby leaving the plurality of discrete units attached to the adhesive application tape
(vi) applying the adhesive application tape with the plurality of discrete units to the substrate on which a graphic is desired so as to sandwich the plurality of discrete units between the surface of the substrate and the adhesive application tape; and removing the application tape.

It has been found that the graphic films made in accordance with the present invention provide excellent anti-graffiti properties similar to those existing in the prior art. The graphic films produced in connection with this invention have excellent weathering stability and are less prone to delamination of the anti-graffiti layer from the graphic. Furthermore, the graphic films can be produced in an easy and convenient way whereby the anti-graffiti layer is hardly noticeable and thus will typically not affect the appeal of the graphic thereby produced. As the anti-graffiti layer is typically highly transparent and clear it also typically does not affect the color of the graphic. Moreover the graphic films can be applied to a wide variety of substrates including those that have uneven and or substantially curved surfaces. Typically, the graphic films in connection with this invention have an enhanced flexibility.

It has been found that the use of polyester films is fully compatible with the manufacturing process of a PVC film. In particular, the polyester film can be directly coated with a PVC organosol or plastisol composition and fusion of the organosol or plastisol by heating was found not to affect the appearance of the graphic film so produced. Additionally, an excellent bonding can be achieved between the PVC film and the polyester film.

### Polyester film

Polyester films for use in connection with the present invention are transparent polyester films. In a particular embodiment, the polyester film is optically clear and transparent. Any type of polyester film may be used but typically the polyester film will be a polyethylene terephthalate based polyester. In a particular embodiment, the polyester film may be oriented including mono- as well as biaxially oriented polyester films. The thickness of the polyester film may be varied widely but is generally selected to achieve a desired flexibility of the graphic film produced. Generally, the thickness of the polyester film will be minimized to optimize flexibility. In the present invention, the thickness of the polyester film is not more than 10 µm. While thinner polyester films will lead to more flexible graphic films, the thickness of the polyester film at the lower end will generally be limited by the ability to handle the film as well as its dimensional stability at higher temperatures (for example 180 to 200 °C). Nevertheless, very thin polyester films can be used in the present method through the aid of a temporary carrier web. Accordingly, polyester films as thin as a few micrometer may be used. In a particular embodiment, the polyester film will have a thickness of at least 2 µm. Generally, the thickness range of polyester films that can be used is between 4 and 10 µm, for example between 5 and 10 µm, Since the polyester film has a thickness of not more than 10 µm, a temporary carrier web is used during the manufacturing of the graphic film. Of course, the use of a carrier web is not limited to polyester films of low thickness and if desired can be used with polyester film of larger thickness.

To enhance the adhesion between the polyester film and the PVC film layer, the surface of the polyester film to which the PVC organosol or plastisol composition is coated or casted, will preferably be treated. Typically, to enhance the adhesion, the polyester film will be provided with a primer layer. Typically, the primer layer will be thin, optically clear and transparent. Also, the primer layer will typically be non-tacky, that is the primer surface of the polyester film should not be rendered sticky. In a particular embodiment, the primer layer may have a thickness of 0.1 to 5 µm, for example between 0.3 and 1.5 µm. Primer layers for polyester films and polyethylene terephthalate films are well known in the art and can be used in connection with this invention. In a particular embodiment, the primer layer includes a copolymer of vinylidene chloride, itaconic acid and an acrylic ester. In another embodiment, the primer layer includes a thermoset acrylic or methacrylic polymer. Still further useful primers include polyester based primers such as primers comprising a copolyester as disclosed in for example US 4745019. Commercially available polyester films that already have a primer layer on one or both major sides that may be used with this invention include primed polyethylene terephthalate films available from Mitsubishi under the Hostaphan trademark. A further commercially available primer is 3M #94 Primer, available from 3M Company. This primer can be coated on polyester by rotogravure printing method. Good bond between polyester film and organosols can be achieved by priming the polyester film with polyvinylbutyral (Mowital B16H dissolved in Xylol and Butanol). Another useful primer include a high molecular weight, hydroxyl-functional, partially hydrolyzed vinyl chloride/vinyl acetate resin.

In accordance with the method of the present invention, a PVC organosol or plastisol is coated onto a major surface of the polyester film. The vinyl chloride polymer of the PVC plastisol or organosol can be homopolyvinyl chloride or a copolymer of a major amount by weight of vinyl chloride and a minor amount by weight of a copolymerizable monomer selected from the group consisting of vinyl acetate, vinylidene chloride and maleic ester. Bulk and solution vinyl chloride polymers, also, may be used. Mixtures of vinyl chloride polymers can be used. Vinyl chloride polymers and copolymers are well known. In this connection please see "Vinyl and Related Polymers," Schildknecht, John Wiley & Sons, Inc., New York, 1952; Sarvetnick, "Polyvinyl Chloride," Van Nostrand Reinhold Company, New York, 1969; Sarvetnick, "Plastisols And Organosols," Van Nostrand Reinhold Company, New York, 1972 and "Modern Plastics Encyclopedia 1980-1981," October, 1980, Volume 57, No. 10A, McGraw-Hill Inc., New York.

The amount of plasticizer used to plasticize the vinyl chloride polymer to make it flexible may vary from 20 to 100 parts by weight per 100 parts by weight of total vinyl chloride polymer resin. Examples of plasticizers which may be used are butyl octyl phthalate, dioctyl phthalate, hexyl decyl phthalate, dihexyl phthalate, diisooctyl phthalate, dicapryl phthalate, di-n-hexyl azelate, diisononyl phthalate, dioctyl adipate, dioctyl sebacate, trioctyl trimellitate, triisooctyl trimellitate, triisononyl trimellitate, isodecyl diphenyl phosphate, tricresyl phosphate, cresyl diphenyl phosphate, polymeric plasticizers, epoxidized soybean oil, octyl epoxy tallate, isooctyl epoxy tallate and so forth. Mixtures of plasticizers may be used.

Other vinyl chloride polymer compounding ingredients are desirably incorporated in the vinyl chloride polymer compositions. Examples of such ingredients are the silicas such as precipitated silica, fumed colloidal silica, calcium silicate and the like, calcium carbonate, ultra violet light absorbers, fungicides, carbon black, barytes, metal soaps heat stabilizers (calcium, barium, cadmium), barium-cadmium-zinc stabilizers, barium-cadmium stabilizers, tin stabilizers, dibasic lead phosphite, zinc borate and so forth and mixtures of the same. TiO₂, carbon black, phthalocyanine blue or green as well as other colored pigments can be used. The pigments and other dry additives preferably are dispersed or dissolved in one or more plasticizers and / or solvents before adding to the plasticized vinyl chloride polymer compositions. These compounding ingredients are used in effective amounts by weight to control color, mildew, stabilization, viscosity and so forth of the plasticized vinyl chloride polymer. Particular colored organosol or plastisol composition that may be useful in connection with this invention are disclosed in US 4259225.

The organosol or plastisol may be coated on the polyester film by any of the coating techniques commonly used for making a PVC film through casting. Particular examples of useful coating techniques include notch bar coating, rotory screen coating, rotogravure coating or slot fed knife coating.

In a typical embodiment, an organosol will be used and accordingly a volatile solvent is included in the PVC composition. Typical solvents that may be used include commercially available solvents such as Solvesso, butylglycol, Terapin (mixture of aliphatic, aromatic and naphthenic hydrocarbons), xylene, ethylacetate, dialkyl ketones (e.g., diisobutyl ketone, methyl isobutyl ketone), dialkyl phthalates, (e.g. di(2-ethylhexyl)ortho-phthalate, di(n-octyl)ortho-phthalate) and dialkyl adipates (e.g. di(2-ethylhexyl)adipate). A single organic solvent or mixtures of organic solvents may be used. The amount of organic solvent employed is usually from 40 to 100 parts by weight of solvent per 100 parts by weight of the PVC resin. In accordance with the method of this application, the coated or casted PVC organosol or plastisol is heated to cause film forming. Generally, the PVC organosol or plastisol coated composition is heated to a temperature between 180°C and 210°C for a period of 30 seconds to 240 seconds. In a particular embodiment, heating may be performed in separate steps at different temperatures. For example in a first step the coated composition may be heated for a first length of time at a first temperature and then for a second time at a second temperature. Typically, the second temperature will be higher than the first temperature.

The thickness of the PVC film may vary widely but typically is at least 10 micrometer. In a particular embodiment, the PVC film may have a thickness of 25 to 100 micrometer. In another embodiment, the thickness may be from 30 micrometer to 80 micrometer or from 30 micrometer to 60 micrometer. Also, in a particular embodiment, multiple layers of PVC may be used. For example in a particular embodiment, a colored PVC layer may be provided with another differently colored PVC layer. Accordingly, in such case, first the PVC layer may be formed on the polyester film followed by forming a second colored PVC layer thereon through coating and heating of an appropriate organosol or plastisol composition. Thus made films have two different colors on each side which is an option for applications on windows. Selection of black second layer can provide block out properties for light transmission. Selection of white or grayish second layer improves the opacity of the final product. Further, special optical effects can be achieved with respective film layers like color change at different viewing angles or color change at different surrounding temperatures. In a further embodiment, a clear transparent PVC layer may be provided with the colored PVC layer.

As discussed above, since the polyester film is thin, a temporary carrier web is used.
Accordingly, the polyester film is then associated or laminated with a temporary carrier web. Particularly suitable carrier webs include a siliconized paper or film that can be temporarily bonded to a major side of the polyester film by means of electrostatic forces. This offers in particular the advantage that the carrier web can be re-used in the manufacturing process of the graphic film and allows bonding of the polyester film thereto without causing wrinkling. With the aid of the carrier web the thin polyester film can be more readily and easily handled during coating of the organosol or plastisol composition onto the polyester film. Furthermore, the dimensional stability of the polyester film is thereby unaffected during the heating of the organosol or plastisol as the winding tension is compensated by the carrier web. Generally, a carrier web is used since the thickness of the polyester film is not more than 10 µm.

In accordance with the present invention, an adhesive layer is applied to the PVC film on the major side opposite to the major side where the PVC film is bonded to the polyester film. In general the adhesive used in the adhesive layer is not particularly restricted. The thickness of the adhesive layer may vary widely. Typically, the adhesive layer will have a thickness of at least 10 micrometer, for example at least 15 micrometer or at least 20 micrometer. In a typical embodiment the thickness of the adhesive layer is from 15 micrometer to 50 micrometer. If desired, a primer layer may be applied to the PVC film to enhance bonding of the adhesive layer to the PVC film. The adhesive layer may be applied to the PVC film layer by coating the adhesive layer onto the PVC film or alternatively by laminating the adhesive layer onto the PVC film.

In a particular embodiment, the adhesive layer comprises a pressure sensitive adhesive (PSA). Pressure sensitive adhesives useful in the present invention can be self-tacky or require the addition of a tackifier. Particularly suitable adhesives for use in the present invention include pressure sensitive adhesives based on an acrylic polymer. Examples of adhesives include PSA's, hot melt or heat activated adhesives that are pressure sensitive at the time of application such as pressure sensitive adhesives disclosed in U.S. Pat. No. 4,994,322 (Delgado et al), U.S. Pat. No. 4,968,562 (Delgado), EP 0 570 515, and EP 0 617 708; and the pressure sensitive adhesives disclosed in U.S. Pat. No. 5,296,277 and 5,362,5165 (both Wilson et al) and U.S. Pat. No. 5,141,790 (Calhoun et al) and WO 96/1687 (Keller et al) and any other type of PSA disclosed in Handbook of Pressure-Sensitive Adhesives, Ed. D. Satas, 2nd Edition, Von Nostrand Reinhold, N.Y., 1989. Other examples of PSA's are, described in U.S. Pat. Nos. Re 24,906 (Ulrich), U.S. Pat. No. 4,833,179 (Young et al), U.S. Pat. No. 5,209,971 (Babu et al), U.S. Pat. No. 2,736,721 (Dester) and U.S. Pat. No. 5,461,134 (Leir et al) and in the Encyclopedia of Polymer Science and Engineering vol. 13, Wiley-Interscience Publishers, New York, 1988, and Encyclopedia of Polymer Science and Engineering, vol. 13, Wiley-Interscience Publishers, New York, 1964. Acrylate-based PSA's which include those described in U.S. Pat. Nos. 4,181,752 (Clemens et al) and U.S. Pat. No. 4,418,120 (Kealy et al), WO 95/13331 and in Handbook of Pressure-Sensitive Adhesives, Ed. D. Satas, 2.sup.nd Edition. Particularly useful PSAs include acrylic polymers comprising repeating units of one or more alkyl (meth)acrylates of which the alkyl group has from 1 to 20 carbon atoms, for example 4 to 12 carbon atoms. Examples of alkyl (meth)acrylate monomers that may be used include isobornyl (meth)acrylate, ethyl(meth)acrylate, butyl(meth)acrylate, iso-octyl (meth)acrylate, 2-ethylhexyl (meth)acrylate and the like. The acrylic polymer may contain co-monomers including polar co-monomers such as ethylenically unsaturated acid monomers including for example (meth)acrylic acid and itaconic acid.

The adhesive of the adhesive layer should typically be removable i.e. allow removal of the graphic film after use. For purposes of this invention, an adhesive is considered to be "removable", if after final application to an intended substrate the sheet material can be removed without damage to the substrate at the end of the intended life of the sheet material at a rate in excess of 25 feet/hour (7.62 meters/hour) by hand with the optional use of heat. In a particular embodiment, the adhesive layer is a repositionable adhesive layer. For the purposes of this invention, "repositionable" refers to the ability to be, at least initially, repeatedly adhered to and removed from a substrate without substantial loss of adhesion capability. A repositionable adhesive usually has a peel strength, at least initially, to the substrate surface lower than that for a conventional aggressively tacky PSA. Suitable repositionable adhesives include the adhesive types used on CONTROLTAC Plus Film brand and on SCOTCHLITE Plus Sheeting brand, both made by 3M Company, St., Paul, Minn., USA.

In a particular embodiment, the adhesive layer in connection with the present invention is a topologically structured adhesive layer or an adhesive layer having at least one microstructured surface. In particular, the adhesive layer has a network of channels between the substrate surface on which the graphics film is being applied and the adhesive layer. The presence of such channels allows air to pass laterally through the adhesive layer and thus allows air to escape from beneath the multi-layer sheet material and the surface substrate during application. The channels are typically produced in the adhesive layer through corresponding ridges of the release liner protecting the adhesive layer prior to application of the adhesive film. Accordingly, reference is made to the detailed description below regarding the release liner.

The adhesive layer is typically protected with a release liner. The release liner is preferably adhesive-repellant and more specifically comprises paper or film, which has been coated or modified with compounds of low surface energy relative to the adhesive applied. Organo silicone compounds, fluoropolymers, polyurethanes and polyolefins can serve this purpose. The release liner can also be a polymeric sheet produced from polyethylene, polypropylene, PVC, polyesters with or without the addition of adhesive-repellant compounds.

In a particular embodiment, the release liner has a microstructured or micro-embossed pattern. For example, the microstructure of the release liner (on its release side facing the adhesive layer) may have a series of ridges along at least two in-plane directions whereby the ridges are interconnected thereby defining a number of recesses enclosed by ridges. The ridges will typically have an average height of not more than 30 micrometer. Typically, the average height may be between 5 and 20 micrometer. The average distance between ridges along an in plane direction of the release liner may be between 50 and 400 micrometer when measured at the top. The geometry or shape of the ridges is not particularly critical and includes, in cross-section, curved, rectangular, trapezoidal, triangular, bimodal, and the like.

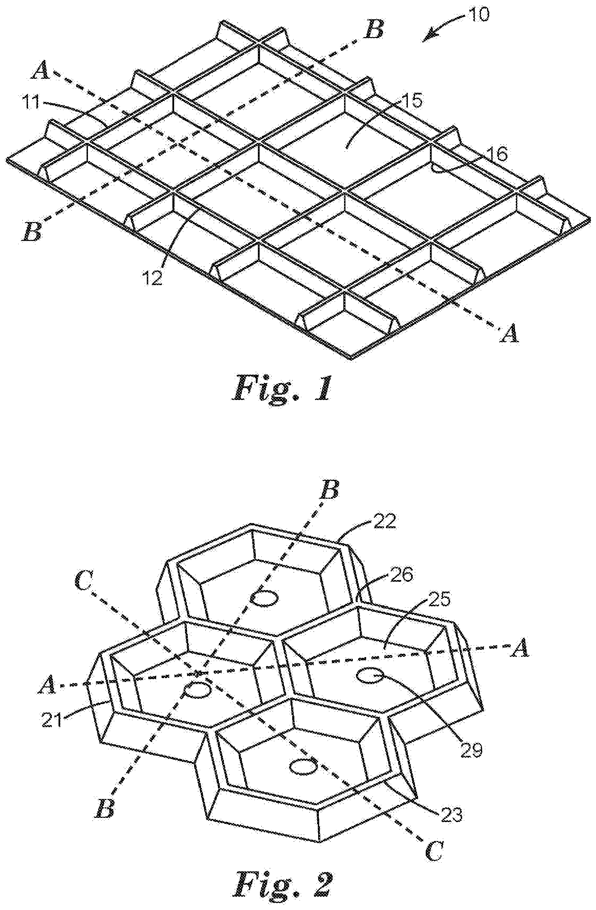

In a particular embodiment illustrated in figure 1, the release liner comprises ridges along two in-plane directions. Figure 1 is a schematic drawing of an interconnected network of ridges on a surface of a release liner 10. A first series of ridges is formed by repeating ridges 11 along in-plane direction A and a second series of ridges formed by repeating ridges 12 along direction B. The ridges connect to each other at intersections 16 thereby defining a pattern of enclosed recesses 15. As shown in figure 1, the enclosed recesses have the shape of a rectangular or square. Alternative shapes of the recesses are contemplated as well and may be formed by additional series of ridges.

For example, figure 2 shows a schematic drawing of an interconnected network of ridges on a surface of a release liner 20. A series of ridges 21, 22 and 23 along respectively in-plane directions A, B and C result in ridges interconnecting at intersections 26 thereby defining a pattern of hexagonal shaped recesses 25. In a particular embodiment the microstructure formed by the ridges on the surface of the release liner may be superimposed with a further pattern defined by discrete small depressions within the recesses defined by the interconnecting ridges. This is illustrated in figure 2 by numerals 29 within the recesses 25. The microstructure of the release liner may be formed by any suitable means including in particular by embossing the liner with an appropriate tool. Methods for producing release liners with a desired microstructure as described herein can be found in for example EP 951 518 and US 2008/0299346.

The graphics film as described above is typically used to produce a graphic on a substrate. The graphic may be an image graphic or a text message or a combination thereof. The graphic may have any size but the adhesive films in connection with this invention are particularly suitable for producing large size graphics for example extending over an area of at least 1 m² or at least 2 m². The graphics film, in particular with thin polyester layer (not more than about 15 µm) is particularly suitable for application on a substrate with an uneven surface. Generally, the graphics film will then be conforming to the uneven surface of the substrate. Examples of uneven surfaces include substrates that have recesses, rivets, or areas of curvature. The graphics film may be applied to a large variety of substrates. Typical applications include applying the film onto building (exterior or interior) as well as on vehicles including in particular motor vehicles such as trains, busses, trams, cars, vans, trucks as well as airplanes.

In connection with a particular embodiment of producing a graphic disclosed herein, the method comprises producing a graphic having a plurality of discrete units of colored graphics film. In this method, the colored graphics film of each of the discrete units comprises the graphics film. The method in this embodiment comprises:
(i) providing a colored graphics film;
(ii) cutting the polyvinyl chloride film and the adhesive layer of the graphics film to define therein the plurality of discrete units,
(iii) delaminating or weeding the cut polyvinyl chloride film and the adhesive layer from the release liner of the graphics film so as to leave the plurality of discrete units on the release liner;
(iv) applying an adhesive application tape over the plurality of discrete units;
(v) removing the release liner thereby leaving the plurality of discrete units attached to the adhesive application tape
(vi) applying the adhesive application tape with the plurality of discrete units to the substrate on which a graphic is desired so as to sandwich the plurality of discrete units between the surface of the substrate and the adhesive application tape; and removing the application tape.

Application tapes for use in this method of this embodiment include any of the application tapes typically used in applying pre-spaced graphics to substrates. The discrete units of colored graphics film are obtained by cutting the graphics film. Any cutting tool can be used including hand tools however, typically a so-called electro cutter will be used. Examples of electro cutters include a sprocket fed/pin fed cutter, a friction bed cutter or a flatbed cutter.

### EXAMPLES

The following examples are provided to further illustrate the invention. These examples are provided to illustrate certain embodiments but are not meant to limit the invention thereto. Prior to that some test methods used to characterize materials and their properties will be described. Unless specified otherwise, percentages are percentages by weight with respect to the mass of the total compositions and add up in each case to 100 weight percent. Parts are parts by weight.

### Test methods

### Graffiti Removal Test

The key test method to characterize the product properties is the Graffiti Removal Test. For this purpose the films were treated with different Paint Pens available from Walta & Macke GbR under the On The Run brand (On The Run-084, On The Run-070, On The Run-060, On The Run-071) and with different paint spray cans available from Feuerstein GmbH, Spray-Color GmbH and L&G Vertriebs GmbH (CoversAll2, CoversAll3, Burner Chrome Premium Devil, Gebro, NC Formulation, SprayVar). Thus treated samples were conditioned for 24 hours. The removal of the paints was carried out with 3M Graffiti Remover (available from 3M Company) by wiping the paints off with a tissue. The removal characteristics were assessed visually. The removal performance is considered to be acceptable if there is no visible difference between treated and cleaned samples compared to non-treated films.

### High Pressure Cleaning Test

To assess the bond of the film after application "High Pressure Cleaning Test" was used. For this purpose the graphic film was applied on panels. The applied film was conditioned for 24 hours. Thus prepared samples were treated with a high pressure cleaner at a pressure of 120 bar in a distance of 5 cm from the nuzzle to the edge of applied film. The product was considered as resistant when the applied film resists this torture for at least 30 seconds.

### Preparation of the films

Graphic films were prepared according to the general procedure outlined below:
In a first step, plasticized PVC organosol consisting of emulsion PVC powder, plasticized with a polymeric plasticizer based on adipic acid, heat stabilized with an organotin stabilizer and diluted with xylene, diisobutyl ketone and Mineral Spirits containing color pigment was casted on a polyester film.

Different polyester films were used as set out below in table 1. Where the thickness of the polyester film was 10 micrometer or less, the polyester film was first laminated to a siliconized paper (GS 120-368 Siliconized 120 g/m² Paper commercially available from Huhtamaki). The coating was dried in a forced air oven at 80°C for 45 second and fused at 195°C for 60 seconds. The coating thickness of the white PVC layer after drying and fusing was approximately 50 µm.

Finally, an acrylic pressure sensitive adhesive as used on commercial graphics film SCOTCHCAL 3650, available from 3M company, coated on a microstructured release liner (as used in IJ40C, available from 3M company) was laminated against the vinyl layer, using a lab laminator. The coating thickness of the adhesive was 35 µm. In a final step, the carrier web when used was removed.

**Table 1**

| Ex no. | Polyester used | Carrier | Anti-Grafitti | High Pressure Cleaning |
|---|---|---|---|---|
| 1 * | PET 25 | none | pass | pass |
| 2 * | PET 12 | none | pass | Pass |
| 3 | PET 6 | 4P Rube | Pass | Pass |

| | | | | |
|---|---|---|---|---|
| * Reference Example PET 25: Hostaphan RUVK 25 C010 from Mitsubishi PET 6: Hostaphan RNK 6 polyethylene terephthalate film from Mitsubishi PET 12: Hostaphan RNK 12 polyethylene terephthalate film from Mitsubishi 4P Rube: 120 g/m2 clay coated paper that was siliconized on one side and commercially available from Laufenberg GmbH. | | | | |

## Claims

1. Method of making a colored graphics film, the method comprising:
(i) providing a transparent polyester film,
(ii) coating thereon a polyvinyl chloride organosol or plastisol composition comprising one or more color pigments,
(iii) heating so as to cause film forming of the polyvinyl chloride organosol or plastisol composition thereby obtaining a colored polyvinyl chloride film adhered on one side thereof to a transparent polyester film and
(iv) applying an adhesive layer to the side of the polyvinyl chloride film opposite to the side adhering to the transparent polyester film;
wherein the thickness of the polyester film is not more than 10 micrometer and wherein a temporary carrier web is provided on the side of the transparent polyester film that is opposite to the side that is being coated with the polyvinyl chloride organosol or plastisol composition and wherein the carrier web is provided on the polyester film prior to coating the polyester film with the polyvinyl chloride organosol or plastisol composition.

2. Method according to claim 1 wherein the method further includes a step of removing the temporary carrier web subsequent to the heating step.

3. Method according to claim 1 or 2 wherein the thickness of the polyester film is not more than 8 micrometer.

4. Method according to any of the previous claims wherein the polyester film is provided with a primer layer on the side that is being coated with the polyvinyl chloride organosol or plastisol.

5. Method according to any of the previous claims wherein the polyester film is a polyethylene terephthalate film.

6. Method according to any of the previous claims wherein the polyvinyl chloride film formed is white, black or a color other than white or black.

## Patentansprüche

1. Verfahren zum Herstellen einer gefärbten Grafikfolie, wobei das Verfahren umfasst:
(i) Bereitstellen einer transparenten Polyesterfolie,
(ii) Auftragen einer Polyvinylchlorid-Organosol- oder -Plastisolzusammensetzung, die ein oder mehrere Farbpigmente umfasst, auf diese,
(iii) Erwärmen, um eine Folienbildung der Polyvinylchlorid-Organosol- oder -Plastisolzusammensetzung zu bewirken, wodurch eine gefärbte Polyvinylchlorid-Folie erhalten wird, die auf einer Seite davon an einer transparenten Polyesterfolie haftet, und
(iv) Aufbringen einer Klebstoffschicht auf die Seite der Polyvinylchlorid-Folie gegenüber der Seite, die an der transparenten Polyesterfolie anhaftet;
wobei die Dicke der Polyesterfolie nicht mehr als 10 Mikrometer beträgt und wobei eine temporäre Trägerbahn an der Seite der transparenten Polyesterfolie bereitgestellt wird, die der Seite gegenüberliegt, die mit der Polyvinylchlorid-Organosol- oder -Plastisolzusammensetzung beschichtet ist, und wobei die Trägerbahn auf der Polyesterfolie vor dem Beschichten der Polyesterfolie mit der Polyvinylchlorid-Organosol- oder -Plastisolzusammensetzung bereitgestellt wird.

2. Verfahren nach Anspruch 1, wobei das Verfahren ferner einen Schritt des Entfernens der temporären Trägerbahn nach dem Erwärmungsschritt umfasst.

3. Verfahren nach Anspruch 1 oder 2, wobei die Dicke der Polyesterfolie nicht mehr als 8 Mikrometer beträgt.

4. Verfahren nach einem der vorstehenden Ansprüche, wobei die Polyesterfolie auf der Seite, die mit dem Polyvinylchlorid-Organosol oder -Plastisol beschichtet ist, mit einer Grundierungsschicht versehen ist.

5. Verfahren nach einem der vorstehenden Ansprüche, wobei es sich bei der Polyesterfolie um eine Polyethylenterephthalatfolie handelt.

6. Verfahren nach einem der vorstehenden Ansprüche, wobei die gebildete Polyvinylchloridfolie weiß, schwarz oder eine andere Farbe als weiß oder schwarz ist.

## Revendications

1. Procédé de fabrication d'un film graphique coloré, le procédé comprenant :
(i) la fourniture d'un film de polyester transparent,
(ii) le revêtement sur celui-ci d'une composition d'organosol ou de plastisol de poly(chlorure de vinyle) comprenant un ou plusieurs pigments de couleur,
(iii) le chauffage de façon à amener une formation de film de la composition d'organosol ou de plastisol de poly(chlorure de vinyle), ce qui permet d'obtenir un film de poly(chlorure de vinyle) coloré fixé par adhérence sur un côté de celui-ci à un film de polyester transparent et
(iv) l'application d'une couche adhésive sur le côté du film de poly(chlorure de vinyle) opposé au côté adhérant au film de polyester transparent ;
dans lequel l'épaisseur du film de polyester n'est pas supérieure à 10 micromètres et dans lequel une bande de support temporaire est fournie sur le côté du film de polyester transparent qui est opposé au côté qui est revêtu avec la composition d'organosol ou de plastisol de poly(chlorure de vinyle) et dans lequel la bande de support est fournie sur le film de polyester avant revêtement du film de polyester avec la composition d'organosol ou de plastisol de poly(chlorure de vinyle).

2. Procédé selon la revendication 1, dans lequel le procédé inclut en outre une étape d'élimination de la bande de support temporaire à la suite de l'étape de chauffage.

3. Procédé selon la revendication 1 ou 2, dans lequel l'épaisseur du film de polyester n'est pas supérieure à 8 micromètres.

4. Procédé selon l'une quelconque des revendications précédentes, dans lequel le film de polyester est pourvu d'une couche d'apprêt sur le côté qui est revêtu avec l'organosol ou plastisol de poly(chlorure de vinyle).

5. Procédé selon l'une quelconque des revendications précédentes, dans lequel le film de polyester est un film de téréphtalate de polyéthylène.

6. Procédé selon l'une quelconque des revendications précédentes, dans lequel le film de poly(chlorure de vinyle) formé est blanc, noir ou d'une couleur autre que blanc ou noir.
